# EUROPEAN PATENT SPECIFICATION

(11) **EP 0 463 069 B1**
(45) Date of publication and mention of the grant of the patent: **24.02.1993**
(21) Application number: 90905186.4
(22) Date of filing: 15.03.1990
(51) Int. Cl.: B65B 53/02

(54) **A METHOD AND AN APPARATUS FOR SHRINKING OF WRAPPING FILMS**
VORRICHTUNG UND VERFAHREN ZUM SCHRUMPFEN EINES VERPACKUNGSFILMS
PROCEDE ET APPAREIL DE THERMORETRECISSEMENT DE FILMS D'EMBALLAGE

(30) Priority: 17.03.1989 DK 1294/89
(43) Date of publication of application: 02.01.1992
(73) Proprietor: Bressendorf Food Tech A/S, DK-7100 Vejle (DK)
(72) Inventor: Bressendorf, Ole, DK-7100 Vejle (DK)
(74) Representative: Nielsen, Leif
(86) International application number: DK9000072
(87) International publication number: WO9011223

(56) References cited:
- EP-A- 0 128 056
- EP-A- 0 309 132
- GB-A- 1 389 158
- GB-A- 2 164 911

## Description

### BACKGROUND OF THE INVENTION

The present invention relates to a method for heat shrinking wrapping films for a product, preferably a food product, by conveying the prewrapped product through an essentially closed shrinking zone wherein a steam, preferably a water steam, is introduced which heats the wrapping film so that it shrinks tightly around the product.

In hitherto known methods shrinkage is achieved in heat tunnels by using hot water or hot air. These media are sprayed and injected, respectively, into the tunnel or the shrinking zone and down onto the pre-wrapped product. Thus a shrinkage of the wrapping film takes place which film thereby contracts around the product.

These known methods are associated with several problems. They are expensive as relatively much hot water is required which is expensive to heat and use as the water is directly discharged as waste water and in some situations this involve expenses for cleaning, etc. The water may also be deposited on the wrapped product, so that a considerable amount of water is removed from the shrinking zone. This may cause inconvenience to succeeding weighing and labelling units. Thus the water may result in inexact weighing results and reduce the attachability of labels on the wrapped product. Furthermore, the shrinking effect obtained by use of water is not particularly good and it is almost impossible to define how and to what extent the shrinkage is desired on different regions of the product.

Hot air is rarely used for shrinking since this method is associated with high operating costs and since furthermore the hot air has a tendency to "burn" the surface both on the wrapping film and on the product proper.

To eliminate the drawbacks associated with the known methods, an apparatus is proposed in GB patent No. 2,164,911 which uses the method mentioned above for shrinking by means of steam heating. However, the apparatus described in this patent is associated with several drawbacks. Thus use of stationary steam nozzles will yield an unsatisfactory shrink packing of irregularly shaped products. Furthermore, the heating effect of the shrinking film will be concentrated in certain areas according to the location of the steam pipe and the orientation of the steam jets. Especially irregularly shaped products will appear with a non-uniform surface of the shrunk film thus rendering the following treatment, like e.g. labelling, difficult.

From EP A1 0,128,056 a method and an apparatus is known wherein it is possible to adjust the location of discharge nozzles. However, only an adjusting in a plane perpendicular to the conveying direction for an object to be wrapped. Moreover, the jets of such nozzles would have a fixed concentration and be emitted in said plane.

It is the object of the present invention to provide a method whereby it becomes possible to eliminate the drawbacks associated with the known method and which makes it possible to obtain a variable shrinkage adapted to the shape of the product so that the wrapped product appears with pure and smooth surfaces thus facilitating the succeeding treatment and imparts to the product an aesthetic attractive appearance.

This object is achieved with a method mentioned in the introductory part which is characterized in that the steam is introduced into the shrinking zone in close vicinity to the product to be wrapped through individually adjustable discharge means which enable an adjustment of quantity, pressure, dispersion, and temperature of the steam, and a number of which are adjusted to emit a steam mist in a direction extending substantially penpendicularly to the conveying direction and the rest of which are adjusted to emit a steam mist at an angle in relation to a plane perpendicularly to the conveying direction, that the intensity of the steam mist along the entire circumference of the product is varied in order to provide varying shrinking effect and that the steam is discharged at a very low velocity from the steam discharge means so that the steam clings around the product rather than hitting the product hard and being thrown back.

The steam being introduced through individually adjustable discharge means, an adjustment of quantity, pressure and temperature may be performed and the discharge means may be adjusted to induce varying amounts of steam onto different parts of the product to provide an adapted shrinking effect. This provides optimum possibility for shrinking the wrapping film in the best possible way in order to obtain the smooth surface and the aesthetic appearance which are important for sales considerations. Besides, such optimum shrinking is advantageous for the shelf-life of the product when it comes to foodstuffs as it becomes possible supplant substantially all air from the wrapping film.

By using steam jets of a relatively low velocity and providing relatively wide dispersion, a direct heating of substantially the entire wrapping film is advantageously obtained as the steam "clings" around the product. It is essential to secure a shrinking of the areas which are not directly exposed to a steam jet, e.g. because of the irregular shape of the product.

The present invention also relates to an apparatus for shrinking of a wrapping film by a method according to the invention and comprising a shrinking tunnel comprising a conveyor for conveying pre-wrapped products through the tunnel and means for discharging steam, preferably water steam, heating the film so that it shrinks, said apparatus being characterized in that the steam discharge means are provided with means for individual adjustment of quantity, pressure, dispersion and temperature and that the steam discharge means are individually adjustable as each of the steam discharge means are arranged for a sideways displacement in a plane substantially perpendicular to the conveying direction, a translation perpendicular to said plane and for an angle position in relation to said plane.

Such an apparatus is advantageous as the adjustable steam discharging means permit a differentiated shrinking effect in different areas of the product. Thus the steam discharge means may be adjusted for delivering a greater quantity of steam or a more concentrated steam jet towards areas where strong shrinking is to be performed. The remaining steam discharge means are adjusted for delivering a smaller quantity of steam. Effective utilization of the steam is hereby obtained as the steam concentration is only high in the areas where a large shrinking effect is desired.

### DESCRIPTION OF THE DRAWINGS

The invention will now be further explained with reference to the accompanyning drawing, wherein
Fig. 1 shows a view of an apparatus for use by the method according to the invention as seen in the conveying direction for a product through the shrinking zone,
Fig. 2 is a side view of the apparatus shown in Fig. 1.

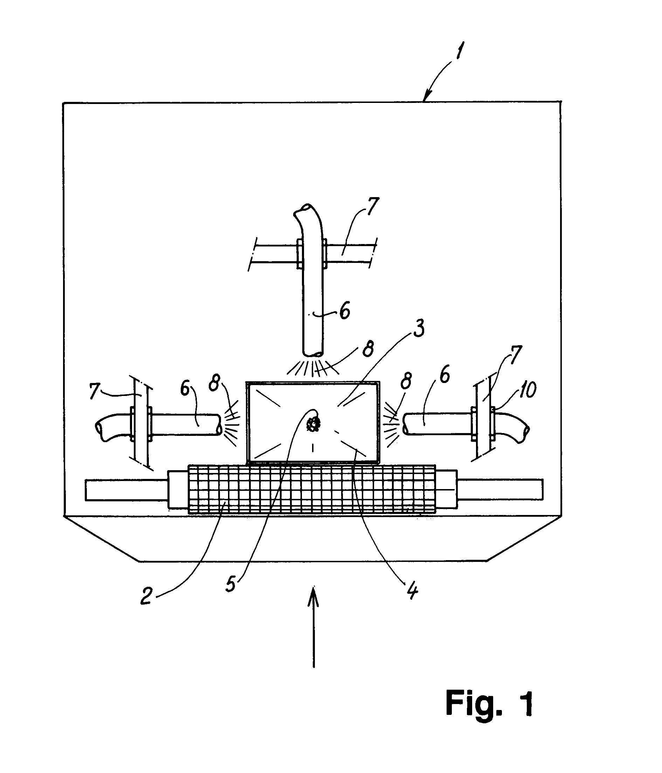

Fig. 1 shows a shrinking tunnel 1. A conveyor 2 and a product 3 in the form of a cheese are provided inside the shrinking tunnel 1. The product is conveyed by means of the conveyor 2 through the shrinking tunnel. The product 3 is pre-wrapped in a film 4, and at each end said film is closed with a clip 5.

The conveyor 2 may be of an open type which also exposes the underside of the product 3. The tunnel is connected to a water steam generator (not shown) generating steam which is introduced into the tunnel 1 via discharging means in form of steam nozzles 6. The steam nozzles comprise means (not shown) for individual adjustment of quantity, pressure, dispersion and temperature. The nozzles 6 are mounted in brackets 7 which permit an adjustment of the nozzles so that the position of their orifices are set according to the product to be shrink-packed. Thus the steam nozzles emit a steam mist 8 over the product. Through adjustment of the nozzles 6 the intensity of the steam mist may be varied across the circumference of the product so that a varying shrinking effect is obtained which makes it possible to obtain a more smooth and aesthetic attractive wrapping of the products 3. This may be obtained even with products having very irregular outer contours.

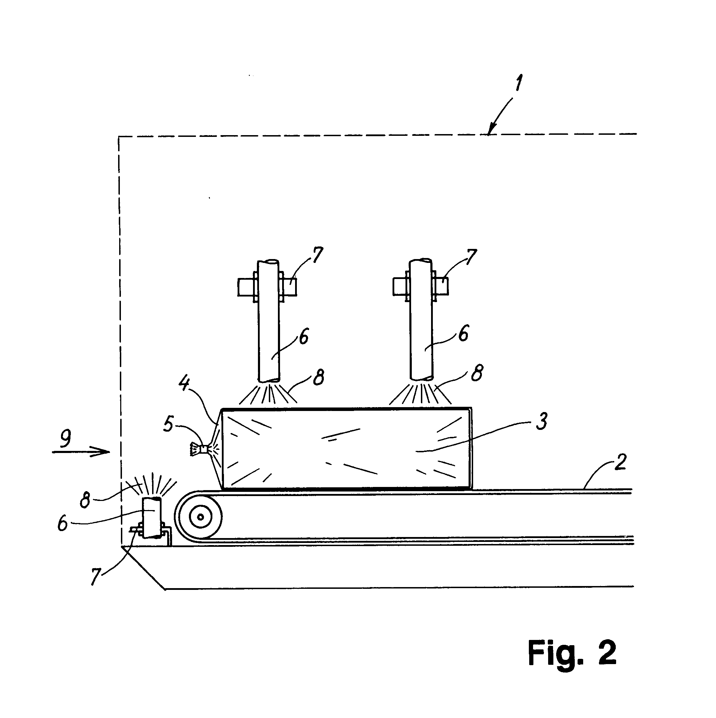

Three nozzles are illustrated in Fig. 1 which are in the plane substantially perpendicurlar to a conveying direction 9 (see Fig.2) for the product. However, it is obvious that this number is only stated for purpose of illustration and that it is possible to use any number of nozzles in order to obtain optimum steam mist around the product to be shrink-packed. It will also be possible to off-set the nozzles in the tunnel and the individual nozzles may be oblique in relation to the mentioned substantially perpendicular plane.

Two successively mounted series of nozzles 6 arranged in this way are illustrated in Fig. 2. However, it is possible to provide any number of successively mounted series which may be practical with a view to the type of products to be packed.

The brackets 7 support a sleeve 10 permitting an axial displacement of the nozzles 6 forwards and backwards through the sleeve 10. Furthermore, the sleeve 10 is arranged for displacement along the bracket 7. Furthermore, the sleeve 10 comprises a ball connection (not shown) permitting an arbitrary angle position of the nozzle 6 in relation to the bracket 7. Thus it is possible to perform a more precise adjustment of the nozzle.

Fig. 2 shows more clearly how a shrinking effect causing the film 4 to fit closely around the product is already imparted to the product 3 with its end being directed forwards in the conveying direction. At the rearwardly facing end of the product, the shrinking effect is not yet completed.

By using the apparatus the conveying velocity of the conveyor 2 is so adapted and the quantity and the velocity of the steam mist 8 is so adjusted that the wrapping film 4, when the product 3 leaves the shrinking zone of the tunnel, is shrunk completely so as to closefit the product. The term "shrinking zone" of the tunnel means the area of the tunnel in which the steam nozzles 6 are active.

Fig. 1 and 2 illustrate the elements necessary to understand the invention. It is obvious that a completely functional apparatus demands further details in the form of driving units, connection wires, control units, discharge channels, etc. However, it will be possible for a person skilled in the art to provide such further elements on the basis of the above description of the invention.

## Claims

1. A method for heat shrinking wrapping films (4) around a product (3), preferably a food product, by conveying the pre-wrapped product through an essentially closed shrinking zone wherein a steam, preferably a water steam, is introduced which heats the wrapping film so that it shrinks tightly around the product, **characterized** in that the steam (8) is introduced into the shrinking zone (1) in close vicinity to the product to be wrapped through individually adjustable discharge means (6) which enable an adjustment of quantity, pressure, dispersion, and temperature of the steam, and a number of which are adjusted to emit a steam mist in a direction extending substantially perpendicularly to the conveying direction (9) and the rest of which are adjusted to emit a steam mist at an angle in relation to a plane perpendicular to the conveying direction (9), that the intensity of the steam mist along the entire circumference of the product (3) is varied in order to provide varying shrinking effect and that the steam (8) is discharged at a very low velocity from the steam discharge means so that the steam clings around the product rather than hitting the product hard and being thrown back.

2. A method according to claim 1, **characterized** in that the pre-wrapped product (3) is conveyed continuously through the shrinking zone (1) at a velocity which is adapted so that the intended shrinking effect has been obtained when the product leaves the shrinking zone.

3. A method according to claim 1, **characterized** in that the product is conveyed through several successive series of steam discharge means (6) and that a desired variation of intensity along the circumference of the product is impared to each series of steam discharge means.

4. A method according to anyone of the preceding claims, **characterized** in that the position of the discharge means is adjusted during the passage of the product through the shrinking zone (1) and that the position adjustment is performed in consequence of a preceding registration of the contours of the product.

5. A method according to claim 1, **characterized** in that the temperature and quantity of the steam are adapted to impart to the wrapped product as little heating as possible and that the product is steamed several times to obtain the desired total shrinking effect.

6. An apparatus for shrinking a wrapping film comprising a shrinking tunnel (1), a conveyor (2) for conveying pre-wrapped products (3) through the tunnel, and means (6) for discharging steam (8), preferably water steam, heating the film so that it shrinks, **characterized** in that the steam discharge means (6) are provided with means (7) for individual adjustment of quantity, pressure, dispersion and temperature and that the steam discharge means (6) are individually adjustable as each of the steam discharge means are arranged for a sideways displacement in a plane substantially perpendicularly to the conveying direction (9), a translation perpendicular to said plane and for an angle position in relation to said plane.

7. Apparatus according to claim 6, **characterized** in that the steam discharge means are provided in a plane substantially perpendicularly to the conveying direction (9) and in a number making it possible to cover substantially the entire circumference of the product and that the tunnel comprises several successively arranged series of steam discharge means (6) arranged in this manner.

8. Apparatus according to claim 6, **characterized** in that it comprises means for registration of the contours of the product and for controlling of the position of the steam discharge means in consequence of this registration.

## Patentansprüche

1. Verfahren zum Warmschrumpfen von Verpackungsfolien (4) um ein Erzeugnis (3), vorzugsweise ein Lebensmittelerzeugnis, herum durch Hindurchbewegen des vorverpackten Erzeugnisses durch eine im wesentlichen geschlossene Schrumpfzone, in die ein Dampf, vorzugsweise Wasserdampf, eingeführt wird, der die Verpackungsfolie erhitzt, so daß sie dicht um das Erzeugnis herum shcrumpft, dadurch **gekennzeichnet**, daß der Dampf (8) in die Schrumpfzone (1) in enger Nachbarschaft zu dem zu verpackenden Erzeugnis durch einzeln einstellbare Dampfabgabemittel (6) eingeführt wird, die eine Einstellung der menge, des Druckes, der Verteilung und der Temperatur des Dampfes ermöglichen, und von denen einige eingestellt sind, um einen Dampfnebel in einer Richtung abzugeben, die sich im wesentlichen rechtwinklig zu der Förderrichtung (9) erstreckt, und von denen die übrigen so eingestellt ist, um einen Dampfnebel unter einem Winkel in Bezug auf eine zu der Förderrichtung (9) rechtwinklige Ebene abzugeben, daß die Intensität des Dampfnebels längs des gesamten Umfangs des Erzeugnisses (3) unterchliedlich ist, um eine unterschiedliche Schrumpfwirkung zu erzielen, und daß der Dampf (8) von den Dampfabgabemitteln mit einer sehr geringen Geschwindigkeit abgegeben wird, so daß der Dampf das Erzeugnis umschmiegt anstatt auf das Erzeugnis hart aufzuprallen und zurückgeschleudert zu werden.

2. Verfarhen nach Anspruch 1, dadurch **gekennzeichnet**, daß das vorverpackte Erzeugnis (3) durch die Schrumpfzone (1) mit einer Geschwindigkeit stetig hindurchbewegt wird, die so eingestellt ist, daß die gewünschte Schrumpfwirkung erreicht worden ist, wenn das Erzeugnis die Schrumpfzone verläßt.

3. Verfahren nach Anspruch 1, dadurch **gekennzeichnet,** daß das Erzeugnis durch mehrere aufeinanderfolgende Serien von Dampfabgabemitteln (6) befördert wird und daß jeder Serie von Dampfabgabemitteln eine gewünschte Änderung der Intensität entlang dem Umfang der Erzeugnisses erteilt wird.

4. Verfahren nach einem der vorhergehenden Ansprüche, dadurch **gekennzeichnet**, daß die Lage der Abgabemittel während des Durchgangs des Erzeugnisses durch die Schrumpfzone (1) eingestellt wird und daß die Lageeinstellung in Abhängigkeit von einer vorherigen Ermittlung des Umrisses des Erzeugnisses durchgeführt wird.

5. Verfahren nach Anspruch 1, dadurch **gekennzeichnet**, daß die Temperatur und die Menge des Dampfes angepaßt sind, um das verpackte Erzeugnis so gering als möglich zu erwärmen, und daß das Erzeugnis wiederholt bedampft wird, um die gewünschte Gesamtschrumpfung zu erzielen.

6. Vorrichtung zum Schrumpfen einer Verpackungsfolie, umfassend einen Schrumpftunnel (1), einen Förderer (2) zum Hindurchbewegen von vorverpackten Erzeugnissen (3) durch den Tunnel und Mittel (6) zur Abgabe von Dampf (8), vorzugsweise Wasserdampf, der die Folie erwärmt, so daß sie schrumpft, dadurch **gekennzeichnet**, daß die Dampfabgabemittel (6) mit Mitteln (7) zur unabhängigen Einstellung der menge, des Druckes, der Verteilung und der Temperatur versehen sind und daß die Dampfagabemittel (6) einzeln verstellbar sind, indem jedes Dampfabgabemittel zu einer seitlichen Verlagerung in einer zur Förderrichtung (9) im wesentlichen rechtwinkligen Ebene, zu einer Bewegung rechtwinklig zu dieser Ebene und zu einer Winkeleinstellung in Bezug auf diese Ebene ausgebildet ist.

7. Vorrichtung nach Anspruch 6, dadurch **gekennzeichnet,** daß die Dampfabgabemittel in einer zu der Förderrichtung (9) im wesentlichen rechtwinkligen Ebene angeordnet und in einer Anzahl vorgesehen sind, die es ermöglicht, im wesentlichen den gesamten Umfang des Erzeugnisses abzudecken, und daß der Tunnel mehrere in dieser Weise angeordnete aufeinanderfolgende Serien von Dampfabgabemitteln (6) umfaßt.

8. Vorrichtung nach Anspruch 6, **gekennzeichnet** durch Einrichtung zur Ermittlung des Umrisses des Erzeugnisses und zur Steuerung der Lage der Dampfabgabemittel in Abhängigkeit von dieser Ermittlung.

## Revendications

1. Procédé pour chauffer des films rétractables d'emballage (4) autour d'un produit (3), de préférence un produit alimentaire, en convoyant le produit pré-emballé à travers une zone de rétraction, pratiquement fermée, dans laquelle est introduit un jet, de préférence un jet d'eau, qui chauffe le film d'emballage de manière qu'il se rétracte fermement autour du produit, caractérisé en ce que le jet (8) est introduit dans la zone de rétraction (1), à proximité immédiate du produit à emballer, à l'aide de moyens d'émission réglables individuellement, qui permettent un réglage de débit, de pression, de diffusion et de température du jet, moyens dont un certain nombre sont réglés pour émettre un jet sous forme de brouillard dans une direction sensiblement perpendiculaire à la direction (9) du convoyage du produit, tandis que les autres moyens sont réglés pour émettre un jet sous forme de brouillard faisant un certain angle par rapport à un plan perpendiculaire à la direction (9) du convoyage, en ce que l'intensité du jet sous forme de brouillard , le long de la périphérie du produit (3), est modifiée pour produire un effet variable de rétraction et en ce que le jet (8) est émis à une vitesse très faible par les moyens d'émission du jet, de telle sorte que le jet adhère au produit plutôt qu'il ne le frappe brutalement et ne rebondisse.

2. Procédé selon la revendication 1, caractérisé en ce que le produit pré-emballé (3) est convoyé, de façon continue, à travers la zone de rétraction (1) à une vitesse qui est déterminée pour que l'effet désiré de rétraction soit obtenu lorsque le produit quitte la zone de rétraction.

3. Procédé selon la revendication 1, caractérisé en ce que le produit est convoyé à travers plusieurs séries successives de moyens d'émission de jet (6) et en ce qu'une variation désirée d'intensité le long de la périphérie du produit est communiquée à chaque série de moyens d'émission de jet.

4. Procédé selon l'une quelconque des revendications précédentes, caractérisé en ce que la position des moyens d'émission de jet est réglée pendant le passage du produit à travers la zone de rétraction (1) et en ce que le réglage de la position est réalisé en fonction d'un enregistrement préalable du contour du produit.

5. Procédé selon la revendication 1, caractérisé en ce que la température et le débit du jet sont déterminés pour communiquer au produit emballé un échauffement le plus petit possible et en ce que le produit est soumis plusieurs fois au jet pour obtenir l'effet total désiré de rétraction.

6. Dispositif pour rétracter un film d'emballage comprenant un tunnel de rétraction (1), un convoyeur (2) pour convoyer les produits pré-emballés (3) à travers le tunnel et des moyens (6) d'émission de jet, de préférence de jet d'eau, destiné à chauffer le film pour qu'il se rétracte, caractérisé en ce que les moyens d'émission de jet (6) sont munis de moyens (7) de réglage individuel de débit, pression, diffusion et température et en ce que les moyens d'émission de jet (6) sont réglables individuellement pour que chaque moyen d'émission soit agencé pour permettre un déplacement latéral dans un plan sensiblement perpendiculaire à la direction du convoyage, une translation perpendiculaire audit plan et un positionnement à un certain angle par rapport audit plan.

7. Dispositif selon la revendication 6, caractérisé en ce que les moyens d'émission de jet sont prévus dans un plan sensiblement perpendiculaire à la direction du convoyage (9) et en un nombre qui rend possible de couvrir sensiblement toute la périphérie du produit et en ce que le tunnel comporte plusieurs séries successives de moyens d'émission de jet (6) disposés de cette manière.

8. Dispositif selon la revendication 6, caractérisé en ce qu'il comprend des moyens pour enregister les contours du produit et pour commander la position des moyens d'émission de jet en fonction de cet enregistrement.
